# EUROPEAN PATENT APPLICATION

(11) **EP 3 958 035 A1**
(43) Date of publication of application: **23.02.2022**
(21) Application number: 21154824.3
(22) Date of filing: 02.02.2021
(51) Int. Cl.: G02B 21/02, G02B 21/00

(54) **LENS ASSEMBLY FOR MICROSCOPIC IMAGING AND CORRESPONDING MICROSCOPE AND IMAGING METHOD**

(71) Applicant: Leica Microsystems CMS GmbH, 35578 Wetzlar (DE); Leica Mikrosysteme GmbH, 1170 Wien (AT)
(72) Inventor: Dr. Wittke, Werner, 35619 Braunfels (DE); Kirmse, Robert, 3003 Gablitz (AT); Dr. Schlaudraff, Falk, 35510 Butzbach (DE)
(74) Representative: DehnsGermany Partnerschaft von Patentanwälten

(57) **Abstract**

The present invention relates to a lens assembly (100) for use in microscopic imaging of a sample (124), the lens assembly (100) comprising a solid immersion lens (110) comprising a planar surface (114) facing the sample (124) to be imaged, a planar object carrier (120), one side of the planar object carrier (120) being in contact with the planar surface (114) of the solid immersion lens (110), the other side of the planar object carrier (120) facing away from the solid immersion lens (110) being configured for carrying the sample (124) to be imaged.

## Description

### Field

The present inventive concept relates generally to high resolution microscopic imaging of samples, particularly making use of a solid immersion lens, more particularly to a lens assembly comprising such a solid immersion lens, and to a microscope comprising such a lens assembly, and to a method for imaging a sample using such a microscope.

### Background

In microscope imaging, the achievable spatial resolution depends on optical parameters like the numerical aperture of the objective lens, which can be increased, for instance, by using liquid immersion techniques in which a fluid of high refractive index is used to optically couple the objective lens and the sample to be imaged. On the other hand, it is often desirable to carry out super-resolution microscopy techniques at cryogenic temperatures, for example in order to image vitrified biological samples in their native state. It is, however, difficult to use wet immersion objective lenses at cryogenic temperatures, because the corresponding immersion fluids are not suitable for cryogenic temperatures, typically below -140° C. Thus, solid immersion lenses have been developed for use in such super-resolution microscopy techniques. A solid immersion lens is typically arranged close to the sample to be imaged and preceding the microscope objective. Advantageously, aplanatic solid immersion lenses can be used to further increase the image resolution. Apart from aplanatic solid immersion lenses (ASIL) hemispheric solid immersion lenses or superhemispheric solid immersion lenses (superSIL) may be used for this purpose.

Aplanatic solid immersion lenses are lenses of strongly reduced optical aberration, particularly spherical aberration and coma are corrected. Hemispherical solid immersion lenses typically consist of a hemisphere lens comprising a planar surface at the equator. A superhemispherical solid immersion lens typically is a hyperhemispheric lens, again comprising a planar truncation surface. It is to be noted that the hemispherical and superhemispherical solid immersion lenses may be aplanatic solid immersion lenses of reduced optical aberration.

WO 2018/167484 A1 discloses an aplanatic solid immersion lens (ASIL) being substantially a truncated spherical ball lens of the thickness r + r/n where r is the ball radius and n is the refractive index of the material of the ball lens. Such a lens differs from a hemispheric lens in the position of the substantially planar truncation surface which in the hemispheric case provides a lens thickness of r. Such a hemispheric solid immersion lens substantially in contact with a sample (at its truncation surface) can be used in combination with a microscope objective to provide a numerical aperture which has a multiple n of the numerical aperture of the objective alone. In contrast, a superhemispherical solid immersion lens in combination with a microscope objective can achieve a numerical aperture which has a multiple n² of the numerical aperture of the objective alone, up to a maximum value of n.

Such an aplanatic superhemispherical solid immersion lens can also provide a larger effective field of view than a hemispheric solid immersion lens. The increase in numerical aperture (n²) is directly dependent on the refractive index of the lens material. A material of high refractive index, such as zirconium dioxide with a refractive index of 2.2 may therefore be used. The solid immersion lens of WO 2018/167484 A1 has a spherical diameter of about 3mm which leads to a lens depth or thickness of about 2.18mm if zirconium dioxide is used. Thus, the microscope objective used with such a solid immersion lens should have a working distance which is long enough to accommodate the solid immersion lens.

The aplanatic solid immersion lens of WO 2018/167484 A1 is especially used where a localisation precision of typically 15nm can be achieved. Other techniques include correlative imaging of a sample in which image data acquired using a cryogenic super-resolution microscopy technique is combined or correlated with image data acquired using electron microscopy and/or X-ray microscopy (so called "Cryo CLEM"). For electron microscopy different types of microscopes can be used such as scanning electron microscopes (SEM) or transmission electron microscopes (TEM).

WO 2020/053557 A1 provides a lens assembly for use in microscopy imaging of a sample in a cryogenic environment. This document particularly teaches the use of a planar mount having an aperture through the principle plane of the mount, in which aperture an aplanatic solid immersion lens is mounted, the planar surface of the lens being parallel to the principle plane of the mount The solid immersion lens may extend from the aperture through the mount in both directions away from the plane of the mount The mount may be formed of a metal, a ceramic, or a semiconductor. If biological samples are to be used with the lens assembly, a biocompatible material such as platinum (Pt) is preferred. For further details regarding the planar mount, the mounting of the solid immersion lens into the mount and the solid immersion lens itself, also regarding functions and applications of such a lens assembly, reference is explicitly made to WO 2020/053557 A1.

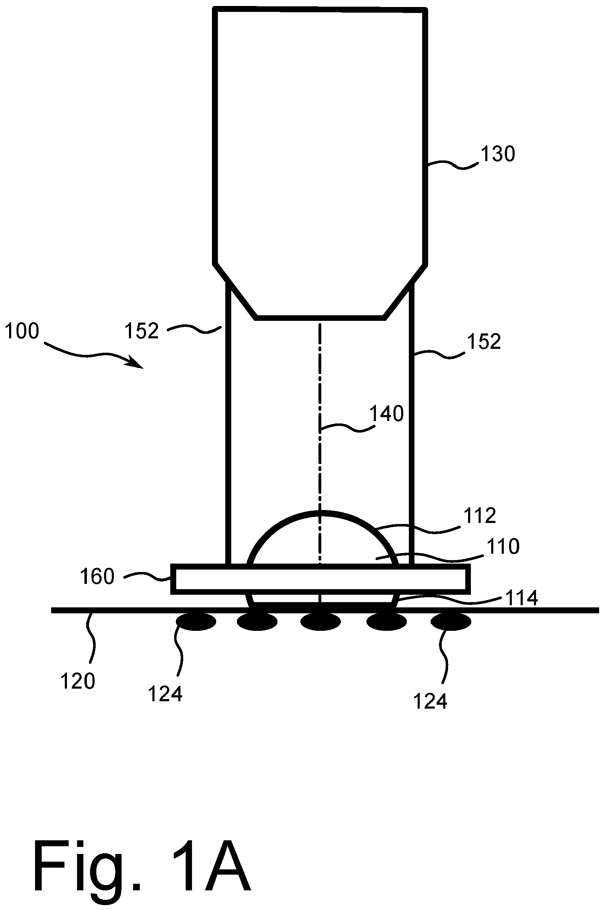

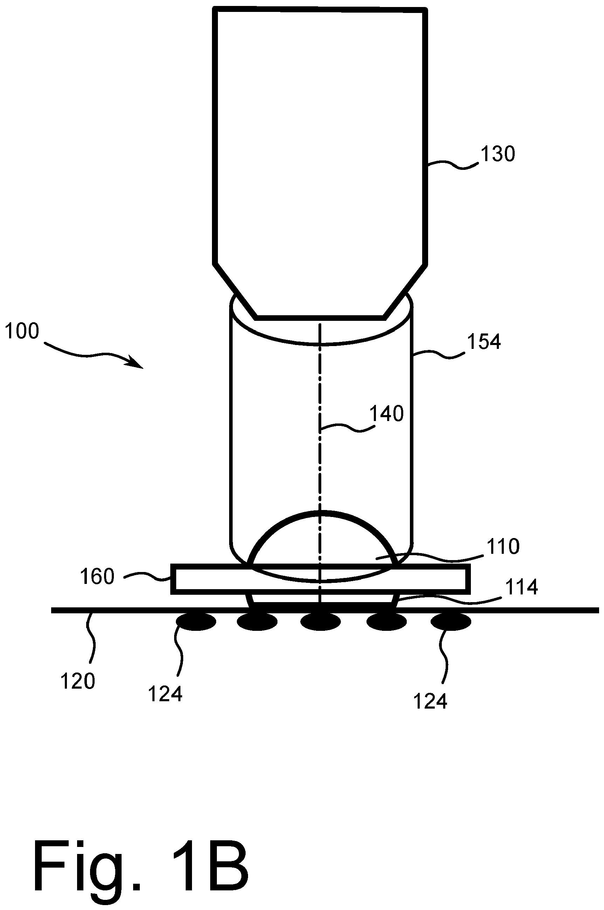

The article "Solid immersion microscopy images cells under cryogenic conditions with 12nm resolution" by Lin Wang et al., Communications Biology, (2019) 2:74, https://doi.org/10.1038/s42003-019-0317-6, www.nature.com/commsbio, describes the use of a superhemispherical solid immersion lens in super-resolution fluorescence microscopy for achieving a 12nm resolution under cryogenic conditions. Figure 1 of this article schematically shows a side-view of a superSIL assembly and a top-view on the plane surface of the superSIL assembly, and a figure of the key components of the corresponding microscope. A superSIL in a Pt disk mount is used, the mount having a thickness of 0.2mm, the superSIL having a thickness or depth of 0.73mm. The diameter of the superSIL is 1mm, the diameter of the mount being 3mm. The drawback, however, of using such a superSIL assembly is the very small sample region of a maximum of 1mm. In practice, this maximum area of 1mm diameter can not be completely used for super-resolution microscopy even if the spherical part of the superSIL is optimally aligned with the microscope objective.

It is often desirable to provide a larger sample region for use in super-resolution microscopy, in particular in connection with solid immersion lenses.

### Summary

The present inventive concept according to the independent claims provides an improved lens assembly comprising a solid immersion lens for use in microscopic imaging of a sample producing a larger sample area, and a corresponding microscope comprising such a lens assembly. Further, a method for imaging a sample using such a microscope is provided. Advantageous embodiments are the subject-matter of the respective dependent claims and of the following description.

According to embodiments of the present inventive concept, the lens assembly comprises a solid immersion lens comprising a planar surface facing the sample to be imaged, a planar object carrier, one side of the planar object carrier being in contact with the planar surface of the solid immersion lens, the other side of the planar object carrier facing away from the solid immersion lens being configured for carrying the sample to be imaged. As already described above, the solid immersion lens of the present inventive concept comprises a planar truncation surface which usually serves to accept a sample for imaging. According to the present inventive concept, however, the sample region is decoupled from the solid immersion lens by providing a planar object carrier in contact with the planar surface of the solid immersion lens, the planar object carrier itself carrying the sample to be imaged. The contact between the planar object carrier and the solid immersion lens may be a direct or an indirect contact as described below.

By decoupling the sample region from the planar surface or truncation surface of the solid immersion lens, the sample region is no longer restricted by the area of the truncation surface. In contrast, the sample area of the lens assembly according to the present inventive concept many times exceeds the sample area previously used in solid immersion lens applications.

The solid immersion lens used in the lens assembly according to the present inventive concept preferably is a hemispheric or superhemispheric or an aplanatic solid immersion lens as described in the background section of the present specification. It is preferred to use an aplanatic superSIL. Reference is made to the discussion of such solid immersion lenses, especially regarding any suitable material, refractive index, size and form, in the background section of this specification. Particularly, a material of high refractive index, particularly of at least 2.0, such as zirconium dioxide or the corresponding crystal "cubic zirconia" with a refractive index of about 2.2, may therefore be used. More generally, the material preferably has a high refractive index and a low absorption over a broad range of wavelengths, and especially at short wavelengths. Examples include cubic zirconia with a refractive index 2.17 and a short-wavelength cutoff at 380 nm. High index glasses are also available, for example, SF6, with a refractive index of 1.805 and a cutoff at 370 nm. Also gallium phosphide, with a refractive index of 3.5 and a cutoff at 550 nm is suitable. Finally, also silicon with a refractive index of 3.5 at the relevant wavelengths is possible.

In a preferred embodiment, the solid immersion lens and the planar object carrier are configured to be movable in relation to one another. In practice, it is often easier to move the planar object carrier, it is, however, also conceivable to move the solid immersion lens in a scanning manner. In this embodiment, the whole area of the planar object carrier may be used as a sample region. With this embodiment, it is possible to scan a large sample area to find points of interest which are then imaged in high resolution.

It should be explicitly noted that the present inventive concept is not restricted to microscopy techniques at cryogenic temperatures. The present inventive concept is rather suitable for any microscopy techniques, be it at cryogenic temperatures, be it at room temperature.

In a preferred embodiment, an immersion liquid is provided between the planar surface of the solid immersion lens and the planar object carrier. The refractive index of such an immersion liquid should be the same or at least substantially the same as the material of the solid immersion lens, however, other known immersion fluids might be used. Providing an immersion liquid between the planar surface of the solid immersion lens and the planar object carrier enables an optimal optical coupling between the lens and the object carrier. On the other hand, due to a reduced friction, it makes a scanning or any other movement of the object carrier in relation to the solid immersion lens easier.

In an advantageous embodiment, the planar object carrier is in the form of a foil, a film, a coverslip, a net or a mesh. The form of the planar object carrier needs to be suitable for carrying a sample to be imaged. A rigid thin coverslip, a thin foil or a thin mesh are mostly preferred. The planar object carrier may have a thickness of less than 1.0 mm, preferably less than 0.5 mm, more preferably less than 0.1mm, most preferably less than 0.05 mm. The material of the planar object carrier is ideally the same material as the material of the solid immersion lens. In general, the solid immersion lens and the planar object carrier should be made of materials of the same refractive index or of materials of essentially the same refractive index, the difference being less than 30%, preferably less than 20%, most preferably less than 10%. A suitable synthetic material can be used, especially for a foil, a film or a coverslip, while also a metallic material may be used in case of a net or a mesh.

The refractive index of the solid immersion lens at wavelengths relevant for microscopy should be not less than 1.5, preferably not less than 1.8, most preferably not less than 2.0.

Depending on the thickness and/or the material of the planar object carrier, it might become necessary to shorten the thickness of the solid immersion lens by the thickness of the planar object carrier. For example, when using a superSIL of a thickness of r+r/n and a foil of the thickness d as a planar object carrier, in order to achieve optimal optical qualities of the resulting lens assembly, it is preferred to "shorten" the lens thickness by using a superSIL of a thickness r+r/n-d.

Another preferred embodiment of the lens assembly of the present inventive concept further comprises a microscope objective, the microscope objective being arranged such that the planar surface of the solid immersion lens faces away from the microscope objective. The microscope objective used with the solid immersion lens should have a working distance which is long enough to accommodate the solid immersion lens. In a preferred embodiment, a superSIL is used as the solid immersion lens in combination with a microscope objective. As already pointed out above, such a combination can achieve a numerical aperture which has a multiple n² of the numerical aperture of the microscope objective alone where n is the refractive index of the superhemispherical solid immersion lens.

In order to optimally use such a lens assembly, it is important that the microscope objective is aligned and/or coupled with the solid immersion lens. In other words, the optical axis defined by the microscope objective, on the one hand, and by the solid immersion lens, on the other hand, should coincide. An optimal alignment can be achieved by coupling the microscope objective and the solid immersion lens, especially if any movement of the solid immersion lens is intended, e.g. for scanning purposes.

In a preferred embodiment, the microscope objective is mechanically coupled with the solid immersion lens. Preferably, the mechanical coupling can be realized by at least one connecting rod and/or by a connecting tube. An easy way of mechanically coupling the solid immersion lens with the microscope objective is using one or more connecting rods, the at least one connecting rod being either directly or indirectly coupled with or fixed to the microscope objective and the solid immersion lens. For example, the at least one connecting rod may be fixed to the lens mount of the microscope objective, on one side, and preferably to the planar mount of the solid immersion lens as discussed further below, on the other side. Same applies for a connecting tube which is used for mechanically coupling the solid immersion lens and the microscope objective. Using a connecting tube is particularly preferred as it can contribute to a reduction of stray light. The diameter of the connecting tube is preferably the same or essentially the same or comparable with the diameter of the microscope objective.

In another preferred embodiment, the microscope objective is moveable together with the solid immersion lens in relation to the planar object carrier. For scanning purposes at least one of the microscope objective together with the solid immersion lens and the planar object carrier may be moved in relation to one another. As already mentioned above, an optimal alignment of microscope objective and solid immersion lens considerably improves the imaging quality and the usable area of the sample region imaged by the lens assembly. A microscope including a lens assembly of this embodiment should therefore allow for such a relative movement of the planar object carrier, on the one hand, and the microscope objective including the solid immersion lens, on the other hand. This may be accomplished by a fixed microscope stage including the object carrier and a moveable, i.e. moveable in the x-y-plane perpendicular to the z-axis (optical axis), microscope objective including the solid immersion lens. This may also be accomplished by a fixed microscope objective including the solid immersion lens and a moveable, i.e. moveable in the x-y-plane perpendicular to the z-axis (optical axis), microscope stage including the object carrier. Finally, it would also be sufficient and possible to only have a moveable, i.e. moveable in the x-y-plane perpendicular to the z-axis (optical axis), object carrier.

In another preferred embodiment, the lens assembly further comprises a planar mount comprising an aperture through the principle plane of the mount, the solid immersion lens being mounted within the aperture of the planar mount Regarding this embodiment, reference is made to the discussion of the planar mount in the background section of the present application. The solid immersion lens is preferably oriented within the mount such that the planar surface of the solid immersion lens is parallel to the principle plane of the mount. The solid immersion lens may extend from the aperture through the mount in both directions away from the principle plane of the mount For microscopic imaging of biological samples a biocompatible material such as platinum (Pt) is preferred. In this embodiment, it is preferred to secure an equatorial region of the solid immersion lens within the aperture of the planar mount The equatorial region can, for instance, be secured by means of nibs protruding from the inside of the aperture of the planar mount

Another aspect of the present inventive concept relates to a microscope for microscopic imaging of the sample. The microscope comprises the lens assembly of the first aspect of the present inventive concept as discussed above and further microscope components (as such known in the art) for generating a microscopic image. In principle, any microscope, especially any microscope using solid immersion lenses, in particular microscopes used in super-resolution microscopy techniques can be used. As already mentioned above, however, the present inventive concept is not restricted to cryogenic microscopy techniques. An example of a microscopic arrangement will be given in connection with the figures below.
Another aspect of the present inventive concept relates to a method for imaging a sample using the microscope according to the previous aspect. The method comprises the steps of placing the sample to be imaged onto the planar object carrier and imaging at least a part of the sample using the microscope. Since the usable sample region is bigger than the area of the truncated surface of the solid immersion lens, the sample can be placed at a position arbitrarily chosen on the planar object carrier, the occupied region, if desired, may be greater than the area of the truncated surface of the solid immersion lens. At least a part of the sample can then be imaged by using the microscope. If the whole sample region is to be imaged, it may be necessary to scan or otherwise move the sample region, i.e. the planar sample carrier in relation to the solid immersion lens. Thus, the method may further comprise the step of moving (or scanning) the microscope objective together with the solid immersion lens in relation to the planar object carrier in order to localize and/or image the sample to be imaged.

It should be noted that the above features of the embodiments according to the various aspects of the present inventive concept can - wholly or in part - be combined to achieve other embodiments still falling under the scope of the present inventive concept as defined in the appended claims. As used herein, the term "and/or" includes any and all combinations of one or more of the associated listed items and may be abbreviated as "/".

Although some aspects have been described in the context of the first aspect of the present inventive concept, it is clear that these aspects also represent a description of the second aspect and of the third aspect of the present inventive concept, and vice versa.

Further embodiments and advantages of the present inventive concept are described below in connection with the following figures.

Short description of the figures
- Figure 1: schematically shows a first embodiment of a solid immersion lens assembly according to the present inventive concept (Figure 1A) and a second embodiment of such a lens assembly (Figure 1B),
- Figure 2: schematically shows a side view (Figure 2A) and a top view (Figure 2B) of a known superhemispheric solid immersion lens assembly, and
- Figure 3: schematically shows a microscope including a lens assembly according to the present inventive concept.

### Detailed description

In the following, the figures are described comprehensively, same reference signs designating same or at least structurally same or identical components.

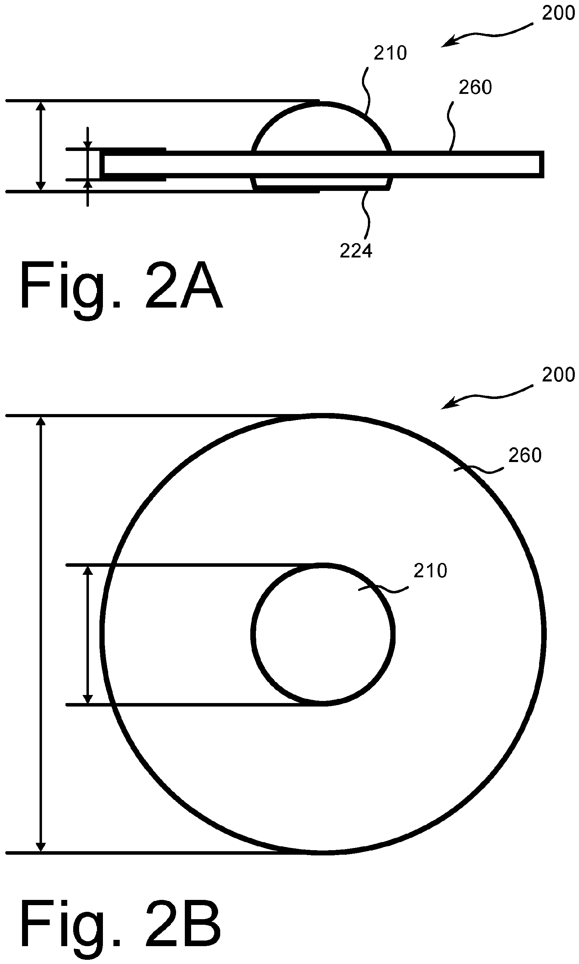

Figure 2 shows an example of a known lens assembly 200 in a schematical side view (Figure 2A) and a schematical top view (Figure 2B). A superhemispherical solid immersion lens 210 being formed as a truncated ball lens of the thickness r+r/n, n being the refractive index of the lens material, is mounted in the aperture of a planar mount 260 as shown in Figure 2A. The truncated planar surface of the superSIL 210 is parallel to the principle plane of the planar mount 260. The superSIL 210 is fixed at its equatorial region by means of nibs or similar fixation means to the planar mount 260.

The example shown in Figure 2 is the same as in the article "Solid immersion microscopy images cells under cryogenic conditions with 12nm resolution", Communications Biology, Nature, as already cited in the introductory part of the present specification. In this example, the thickness of the superSIL is 0.73mm, the thickness of the planar mount (Pt disk) is 0.2mm. The diameter of the superSIL is 1.0mm which corresponds to the area of the sample region 224 which is, in practice, even less than 1.0mm. The diameter of the Pt disk 260 is 3.0mm. Such a lens assembly 200 is used together with a 0.5 NA dry microscope objective. The superSIL is made of zirconia. The superSIL is mounted into the central hole of the platinum disk using a thermally conductive cryo-adhesive. The superSIL assembly is used with a standard liquid nitrogen-cooled cryo-stage. The samples to be imaged are kept at cryogenic temperatures (about 77K) by LN₂ vapor surrounding the microscope stage. The refractive index of the superSIL is 2.17. The superSIL lens assembly 200 according to this article is used for STORM imaging (stochastic optical reconstruction microscopy imaging). Images of plunge-frozen bacteria at 12nm resolution are achieved.

An obvious drawback of the lens assembly shown in Figure 2 is the small sample region 224 of a maximum of 1.0mm diameter.

Figure 1 shows a lens assembly 100 according to the present inventive concept providing a much larger sample region. Samples in the sample region are designated 124. In principle, the only limit to the sample region is the area of the planar sample carrier 120 itself, as any samples 124 on the planar object carrier 120 can be imaged by moving the sample 124 into the field of view of the lens assembly 100.

In a first embodiment of the lens assembly 100 as shown in Figure 1A, a microscope objective 130 is coupled to a superSIL assembly comprising a superSIL 110 mounted into a planar mount 160. The superSIL 110 comprises a spherical surface 112 and a truncated surface 114 forming the planar surface 114 of the superSIL 110. Other characteristics (material, size and form) of the superSIL 110 may be the same as the ones of the superSIL of Figure 2. The planar surface 114 of the superSIL 110 is oriented parallel to the principle plane of the planar mount 160. Coupling between the objective 130 and the superSIL 110 is achieved by connecting rods 152 extending between the microscope objective 130 or the microscope objective mount (not shown) and the planar mount 160 of the superSIL assembly. Such a mechanical coupling guarantees a fixed alignment of the superSIL 110 and the microscope objective 130. The optical axis defined by the microscope objective 130 is designated 140. It coincides with the optical axis of the superSIL 110.

The planar object carrier 120 in the embodiment shown in Figure 1A may be a thin rigid coverslip or a thin foil of a thickness of less than 1.0 mm, preferably less than 0.5 mm, more preferably less than 0.1mm, most preferably less than 0.05 mm. The thin coverslip or foil may be made of a suitable synthetic material, preferably the same as the superSIL. Any sample 124 carried by the sample carrier 120 can be imaged after the sample 124 has been moved into the field of view of the lens assembly 100. To this end, the object carrier 120 is movable in relation to the superSIL assembly. This can be achieved by moving the foil 120 in an x-y-direction, e.g. by inserting the foil 120 into a microscope stage movable in x-y-direction. On the other hand, it is also conceivable to move the superSIL assembly together with the microscope objective 130 in an x-y-plane. With such an arrangement it is also possible to scan a larger area of a sample region.

Figure 1B shows a similar embodiment of a lens assembly 100 according to the present inventive concept For sake of conciseness, only the different features compared to the embodiment of Figure 1A are discussed in the following. The microscope objective 130 in this embodiment is coupled to the superSIL assembly by a connecting tube 154. The connecting tube is preferably connected at its one end to the microscope objective mount and with its other end to the planar mount 160 of the superSIL 110. Apart from the mechanical coupling, the connecting tube 154 provides the effect of reducing stray light and scattered light contributing to the undesired noise in the sample image. The diameter of the connecting tube 154 essentially corresponds to the diameter of the microscope objective 130.

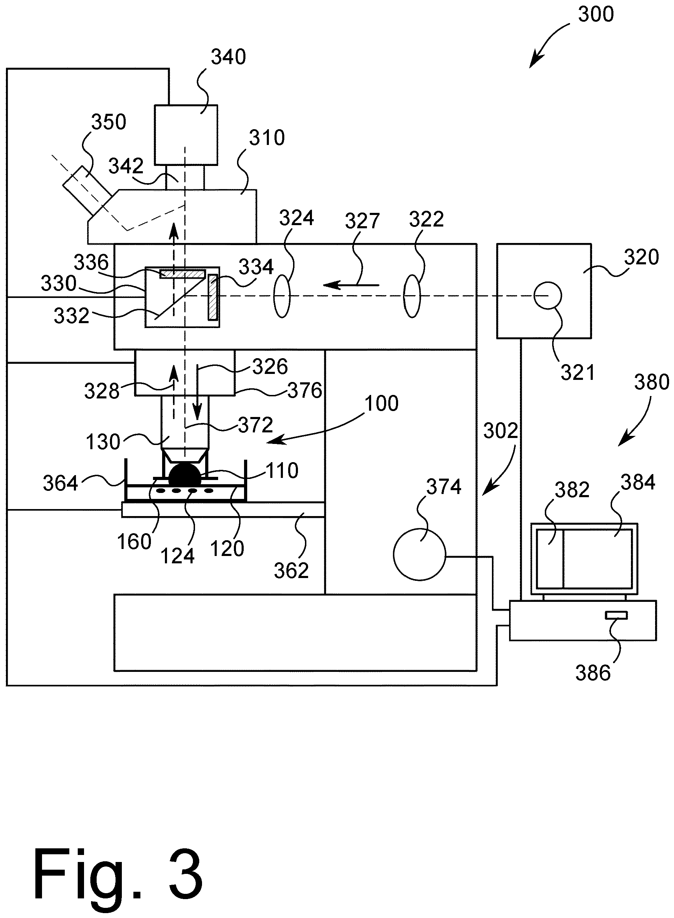

Figure 3 schematically shows a microscope 302 comprising a lens assembly 100 according to the present inventive concept. Reference sign 300 designates a microscope system comprising a microscope 302 which is embodied as a fluorescence microscope, and a control unit 380, as described below. Both components 302 and 380 of the system can, however, also be regarded forming one single microscope 300. It should be noted that the embodiment of Figure 3 is illustrative only and should not be understood as restricting the scope of the invention to a microscope according to this embodiment It should rather be understood as one of a plurality of possible applications of the present invention in a microscope.

The microscope 302 comprises an incident light illumination unit 320 including as the main components a light source 321 and lenses 322, 324. The directions of the generated illumination beam path are designated 326 and 327. The illumination beam path is directed to a microscope objective 130 via a filter cube 330. The filter cube 330 comprises an excitation filter 334 and an emission filter 336 as well as a dichroic mirror 332. The illumination beam path thus passes the excitation filter 334 and is deflected by the dichroic mirror 332 into the direction of the optical axis 372. The illumination beam path 326 then passes through a lens assembly 100 including the microscope objective 130 to be incident upon the sample 124. The lens assembly 100 essentially corresponds to the one shown in Figure 1A as discussed above, and comprises the microscope objective 130 coupled to a superSIL 110 mounted into a planar mount 160. Coupling between the objective 130 and the superSIL 110 may be achieved by connecting rods 152 (see Fig. 1A) extending between the microscope objective 130 or a microscope objective mount (not shown) and the planar mount 160 of the superSIL assembly. Such a mechanical coupling guarantees a fixed alignment of the superSIL 110 and the microscope objective 130. The optical axis 372 coincides with the optical axis of the superSIL 110.

Any sample 124 carried by the sample carrier 120 can be imaged when the sample 124 is moved into the field of view of the lens assembly 100. In the embodiment shown, the microscope stage 362 carries a receptacle 364 which contains the sample 124 in a cryogenic medium such as liquid nitrogen or vaporized liquid nitrogen. As schematically shown, the sample 124 adheres to the bottom side of the object carrier 120.

In order to move the sample 124 into the field of view of the lens assembly 100, the object carrier 120 is movable in relation to the superSIL assembly. This can be achieved by moving the object carrier 120 in an x-y-direction either alone or by e.g. mechanically coupling the object carrier 120 with the receptacle 364 and thus with the microscope stage 362 movable in x-y-direction as shown in Figure 3. On the other hand, it is also conceivable to move the superSIL assembly together with the microscope objective 130 in an x-y-plane while having e.g. a fixed microscope stage. With such arrangements it is therefore possible to scan a larger area of a sample region compared to hitherto known solutions.

In the present example of a fluorescence microscope 302, the sample 124 is typically dyed with specific dyes in order to make structures visible which would otherwise be non-visible. In most cases, it is also possible to monitor a change over time especially of biological structures. Fluorescent light emitted by the sample 124 is imaged through the microscope 302 by its lens assembly 100 and a tube 310 and eyepiece 350 and/or an image acquisition detector or camera 340. The camera or image acquisition detector 340 is coupled to the tube 310 by a camera adapter 342. The direction of the corresponding imaging beam path is designated 328. In order to focus the objective 130 onto the structures of a sample 124 to be imaged, in this example a focus setting knob 374 may be provided for moving the objective 130 and/or the motorized microscope stage 362 in the z-direction corresponding to the main optical axis 372.

Operating such fluorescence microscopes 302 often requires a user to be highly experienced in the technology of such fluorescence microscopes. In order to automatically adjust one or more microscope components of the microscope 302 in a way adapted to the sample 124 to be examined, in this example, a control unit 380 may be provided. The control unit 380 in this example comprises a user interface 382 configured to receive information about the sample. In the present embodiment, the user interface 382 may be a graphical user interface 382. Next to the user interface 382, there is a microscope image display 384 for displaying the imaged structures of the sample 124 on a display. The control unit 380 further comprises a processor 386 as schematically indicated in Figure 3. The microscope 302 and the control unit 380 are parts of the microscope system 300 enabling a user to input information about the sample 124 via the user interface 382 resulting in an automatic adjustment of microscope components depending on the sample information by the control unit 380. The control unit 380 may also be integrated into the microscope 302.

In order to automatically adjust the microscope components of the microscope 302, the control unit 380 may be connected to the corresponding microscope components as shown in the example of Figure 3. The control unit 380, by way of example only, may be connected to the focus setting knob 374, to the motorized microscope stage 362, to objective 130 and/or to the objective turret 376, to the filter cube 330 and to the illumination unit 320. Moreover, the control unit 380 may be connected to the image acquisition detector 340 in order to set or restrict at least one of the detector parameters of the image detector 340 depending on the sample information.

Again, it should be noted that the microscope shown in Figure 3 depicts microscope components which are not necessarily needed to perform the present invention. It should also be noted again that any other microscope, e.g. a confocal microscope, is also suitable for implementing the present invention.

### List of reference signs

- 100: lens assembly
- 110: superSIL
- 112: spherical surface
- 114: planar surface
- 120: planar object carrier
- 124: sample
- 130: microscope objective
- 140: optical axis
- 152: connecting rod
- 154: connecting tube
- 160: planar mount

- 200: lens assembly
- 210: superSIL
- 224: sample region
- 260: planar mount

- 300: microscope system
- 302: microscope
- 310: tube
- 320: illumination unit
- 321: light source
- 322: lens
- 324: lens
- 326, 327: directions of illumination beam path
- 328: direction of imaging beam path
- 330: filter cube
- 332: dichroic mirror
- 334: excitation filter
- 336: emission filter
- 340: camera, image acquisition detector
- 342: camera adapter
- 350: eyepiece
- 360: sample
- 362: microscope stage
- 364: receptacle
- 372: (main) optical axis
- 374: focus setting knob
- 376: objective turret
- 380: control unit
- 382: user interface
- 384: microscope image display
- 386: processor

## Claims

1. A lens assembly (100) for use in microscopic imaging of a sample (124), the lens assembly (100) comprising
a solid immersion lens (110) comprising a planar surface (114) facing the sample (124) to be imaged,
a planar object carrier (120), one side of the planar object carrier (120) being in contact with the planar surface (114) of the solid immersion lens (110), the other side of the planar object carrier (120) facing away from the solid immersion lens (110) being configured for carrying the sample (124) to be imaged.

2. The lens assembly (100) of claim 1, wherein the solid immersion lens (110) is an hemispheric or a superhemispheric or an aplanatic solid immersion lens.

3. The lens assembly (100) of claim 1 or 2, wherein the solid immersion lens (110) and the planar object carrier (120) are configured to be movable in relation to one another.

4. The lens assembly (100) according to any one of the preceding claims, wherein an immersion liquid is provided between the planar surface (114) of the solid immersion lens (110) and the planar object carrier (120).

5. The lens assembly (100) according to any one of the preceding claims, wherein the planar object carrier (120) is in the form of a foil, a film, a coverslip, a net or a mesh.

6. The lens assembly (100) according to any one of the preceding claims, wherein the solid immersion lens (110) and the planar object carrier (120) are made of the same material or of materials of the same refractive index or of materials of essentially the same refractive index, the difference being less than 30%, or less than 20%, or less than 10%.

7. The lens assembly (100) according to any one of the preceding claims, wherein the lens assembly (100) further comprises a microscope objective (130), the microscope objective (130) being arranged such that the planar surface (114) of the solid immersion lens (110) faces away from the microscope objective (130).

8. The lens assembly (100) of claim 7, wherein the microscope objective (130) is aligned and/or coupled with the solid immersion lens (110).

9. The lens assembly (100) of claim 8, wherein the microscope objective (130) is mechanically coupled with the solid immersion lens (110) by at least one connecting rod (152) and/or by a connecting tube (154).

10. The lens assembly of any one of claims 7 to 9, wherein the microscope objective (130) is movable together with the solid immersion lens (110) in relation to the planar object carrier (120).

11. The lens assembly (100) according to any one of the preceding claims, wherein the lens assembly (100) further comprises a planar mount (160) comprising an aperture through the principle plane of the mount, the solid immersion lens (110) being mounted within the aperture of the planar mount (160).

12. The lens assembly (100) according to claim 11, wherein the solid immersion lens (110) is oriented within the mount (160) such that the planar surface (114) of the solid immersion lens (110) is parallel to the principle plane of the mount (160).

13. The lens assembly (100) of claim 11 or 12, wherein an equatorial region of the solid immersion lens (110) is secured within the aperture of the planar mount (160).

14. A microscope (302) for microscopic imaging of a sample (124) comprising the lens assembly (100) of any one of the preceding claims, particularly comprising the lens assembly (100) of any one of claims 7 to 10 together with further microscope components (310, 340, 350) for generating a microscopic image.

15. A method for imaging a sample (124) using the microscope (302) of claim 14 and comprising the steps of
placing the sample (124) to be imaged onto the planar object carrier (120), and
imaging at least a part of the sample (124) using the microscope (302).

16. The method of claim 14 using the lens assembly (100) of claim 9 and further comprising the step of moving the microscope objective (130) together with the solid immersion lens (110) in relation to the planar object carrier (120) in order to localize and/or image the sample (124) to be imaged.
